# EUROPÄISCHE PATENTSCHRIFT

(11) **EP 1 052 174 B1**
(45) Veröffentlichungstag und Bekanntmachung des Hinweises auf die Patenterteilung: **08.10.2003**
(21) Anmeldenummer: 00109209.7
(22) Anmeldetag: 28.04.2000
(51) Int. Cl.: B65B 57/00, B65B 9/04

(54) **Vakuum-Tiefziehverpackungsmaschine**
Vacuum deep-drawing packaging machine
Machine d'emboutissage sous vide pour la fabrication d'emballages

(30) Priorität: 04.05.1999 DE 19920260
(43) Veröffentlichungstag der Anmeldung: 15.11.2000
(73) Patentinhaber: Maschinenbau Hajek GmbH & Co., 6901 Bregenz (AT)
(72) Erfinder: Hajek, Heinrich, 6971 Hard (AT)
(74) Vertreter: Riebling, Peter, Dr.-Ing.

(56) Entgegenhaltungen:
- EP-A- 0 483 446
- DE-U- 8 623 122

## Beschreibung

Die Erfindung betrifft eine Vakuum-Tiefziehverpackungsmaschine nach dem Oberbegriff der unabhängigen Patentansprüche.

Aus dem Stand der Technik sind derartige Vakuum-Tiefziehverpackungsmaschinen zum Verpacken von Produkten, vorzugsweise Nahrungsmittelprodukten, bekannt. Sie bestehen im wesentlichen aus einem Maschinenkörper, an welchem in Längsrichtung sequentiell hintereinander angeordnet verschiedene Verarbeitungsstationen, wie eine Tiefzieh-Formstation, ein Einlegebereich, eine Vakuum- und Siegelstation und eine Schneidestation angeordnet sind.

Ausgehend von einer Unterbahnfolie, die von einer Folienrolle abgezogen wird, wird in der Formstation die Unterform der Verpackung geformt und läuft dann taktend weiter in den Einlegebereich, wo das zu verpackende Produkt manuell oder maschinell in die Unterform eingelegt wird. An den Einlegebereich schließt sich die Vakuum- und Siegelstation an, in welcher die Folienoberbahn, die von einer Folienrolle abgezogen wird, auf die Unterschale aufgelegt wird, wonach die Verpackung vakuumiert und versiegelt wird. Nachfolgend werden die zusammenhängenden Verpackungen längs- und quergeschnitten, und können in einem Auslaufbereich entnommen werden.

Zwischen der Formstation und dem Einlegebereich und Einlegebereich und Vakuum-/Siegelstation sind abgedeckte, vor Zugriff geschützte Sicherheitsbereiche vorgesehen, um die vorgeschriebenen Sicherheitsbestimmungen zu erfüllen. Diese Sicherheitsbereiche sollen einen Zugriff auf die Arbeitsorgane der Maschine während des Weitertaktens verhindern. Dadurch vergrößert sich jedoch die Baulänge der Maschine.

Die Schrift DE 86 23 122 U offenbart eine Maschine nach dem Oberbegriff der Ansprüche 1 und 2. Die EP 0 483 446 A offenbart eine Schutz- und Sicherheitseinrichtung für eine Verpackungsmaschine, welche den Bereich zwischen Formstation und Vakuum-/Siegelstation nicht vollständig abdeckt und dadurch eine größere Baulänge der Verpackungsmaschine notwendig macht. Eine Formstation, die gleichzeitig den Einlegebreich für die zu verpackenden Produkte bildet, geht aus diesen Schriften nicht hervor.

Es ist Aufgabe der vorliegenden Erfindung, eine Vakuum-Tiefziehverpackungsmaschine der eingangs genannten Art derart weiterzubilden, daß sie bei gleicher Verpackungsleistung eine wesentlich geringerer Baulänge aufweist.

Diese Aufgabe wird durch die Merkmale der unabhängigen Patentansprüche gelöst.

In einer ersten Ausführungsform ist vorgesehen, daß zwischen Formstation und Vakuum-/Siegelstation ein Einlegebereich vorgesehen ist, der durch eine Sicherheitseinrichtung vor Zugriff während des Vorschubs geschützt ist und dadurch gleichzeitig den vorgeschriebenen Sicherheitsbereich ausbildet. Die Sicherheitseinrichtung besteht aus einer entfernbaren oder beweglichen Schutzabdeckung.

In einer zweiten Ausführungsform der Erfindung ist vorgesehen, daß die Formstation gleichzeitig als Einlegebereich für die Produkte genutzt wird. Dabei ist die Formkammer der Formstation durch eine Sicherheitseinrichtung vor Zugriff während des Vorschubs geschützt. Die. Sicherheitseinrichtung besteht aus einer entfernbaren oder beweglichen Schutzabdeckung. Somit bildet die Formstation gleichzeitig den vorgeschriebenen Sicherheitsbereich aus. Nach dem Abnehmen der Schutzabdeckung liegt die Formstation mit der geformten Folie frei und das Produkt kann eingelegt werden.

Durch die Zusammenfassung zweier oder mehrerer Verarbeitungsstationen und/oder Sicherheitsbereiche zu einer einzigen Station kann die Baulänge der Maschine bei gleicher Leistung und Qualität der Verpackung wesentlich verkürzt werden. Dadurch kann eine solche Verpackungsmaschine auch in Kleinbetrieben eingesetzt werden, bei denen die Anschaffung einer herkömmlichen Verpackungsmaschine gleicher Leistung aus platzgründen nicht möglich war.

Vorteilhaft ist die Schutzabdeckung als Klappdeckel ausgebildet, der in Richtung Maschinenseite aufgeklappt werden kann. Sie kann aber auch als horizontal verschiebliche Abdeckung ausgebildet sein.

Es ist ferner vorgesehen, die Schutzabdeckung manuell betätigbar auszubilden. Im Rahmen einer weiteren Automatisierung und erhöhter Sicherheit ist es natürlich auch möglich, die Schutzabdeckung maschinell zu betätigen. Dafür bietet sich ein elektromotorischer oder pneumatischer Antrieb an.

In einer weiteren bevorzugten Ausbildung der Erfindung, besteht die Schneideinrichtung aus lediglich einer Querschneideeinrichtung und einer Längsschneideeinrichtung. Dadurch kann die Baulänge der Maschine zusätzlich verkürzt werden, denn es kann auf die bisher notwendigen zweite Querschneideeinrichtung verzichtet werden. Um die selbe Schneidleistung wie beim Einsatz von zwei Querschneideeinrichtungen zu erreichen, ist beim Vorschub ein Zwischentakt vorgesehen, in welchem eine zusätzliche Querschneidung erfolgt.

Nachfolgend wird die Erfindung anhand eines Ausführungsbeispiels unter Bezugnahme auf mehrere Zeichnungen näher erläutert. Aus den Zeichnungen und ihrer Beschreibung gehen weitere Merkmale und Vorteile der Erfindung hervor.

Es zeigen:
- Figur 1:: eine Frontansicht der erfindungsgemässen Tiefziehverpackungsmaschine;
- Figur 2:: eine Draufsicht auf die erfindungsgemäße Tiefziehverpackungsmaschine;
- Figur 3:: eine Stirnansicht der Tiefziehverpackungsmaschine aus Richtung des Auslaufbereichs;
- Figur 4:: eine Frontansicht einer Tiefziehverpackungsmaschine nach dem Stand der Technik;
- Figur 5:: eine Draufsicht auf die Tiefziehverpackungsmaschine nach dem Stand der Technik.

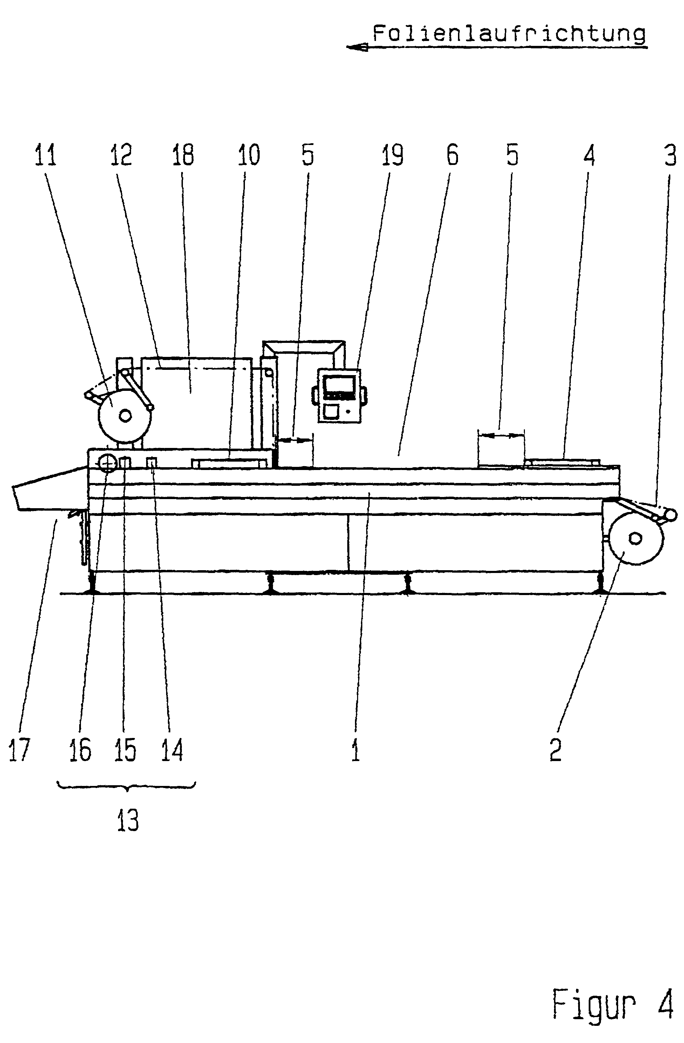

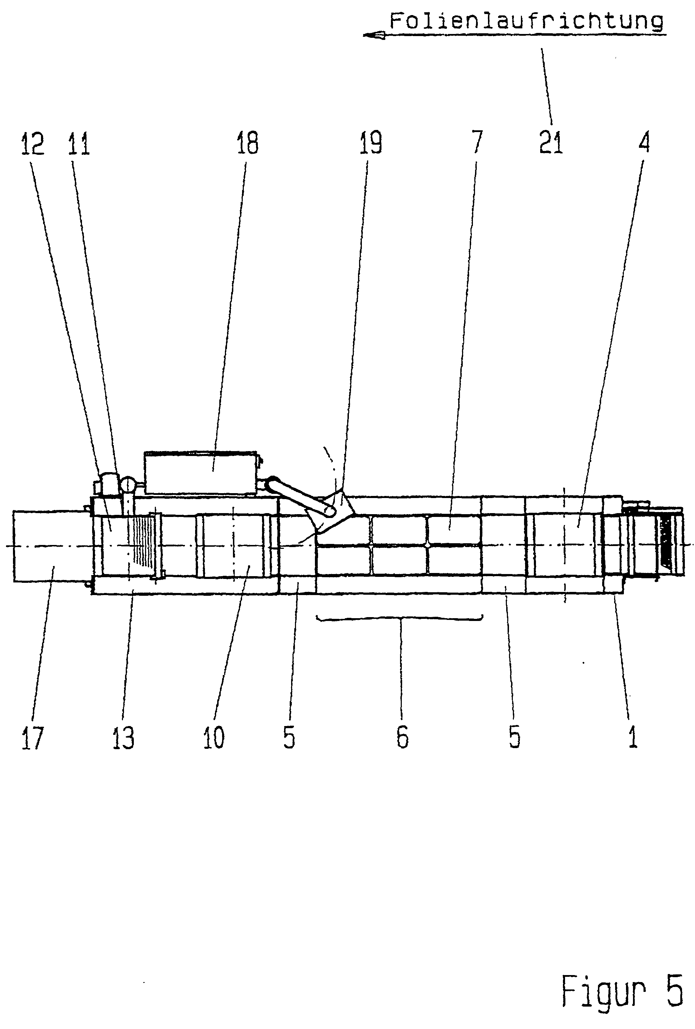

In den Figuren 4 und 5 ist eine Tieftziehverpackungsmaschine nach dem Stand der Technik dargestellt. Die Tiefziehverpackungsmaschine umfaßt einen Maschinenkörper 1, an dem eine Folienrolle 2 für die Unterfolie 3 angeordnet ist, die in Folienlaufrichtung 21 einer Formstation 4 zugeführt wird. In der Formstation 4 werden im Tiefziehverfahren Verpackungsunterschalen 7 aus der Folie gebildet, welche dann Taktweise die Formstation 4 verlassen und einem Einlegebereich 6 zugeführt werden. Zwischen dem Einlegebereich 6 und der Formstation 4 ist ein Sicherheitsbereich 5 vorgesehen, welcher mit einer festen Abdeckung versehen ist, so daß ein Zugriff auf die Verpackungsunterschalen 7 nicht möglich ist. Im Einlegebereich 6 wird das zu verpackende Produkt in die Verpackungsunterschalen 7 eingelegt, wonach die Verpackungsunterschalen 7 einer Vakuum- und Siegelstation 10 zugeführt werden, wo eine Oberfolie 12 auf die Verpackungsunterschalen aufgelegt wird, die von einer Folienrolle 11 abgezogen wird. Die Verpackungsschalen 7 werden vakuumiert und mit der Oberfolie 12 verschweißt und nachfolgend einer Schneidestation 13 zugeführt, welche zwei Querschneideeinrichtungen 14, 15 umfaßt, welche die Verpackung in Querrichtung trennen sowie eine Längsschneideeinrichtung 16, welche die Verpackungen in Längsrichtung trennen, so daß sich einzelne Verpackungen ergeben, die in einem Auslaufbereich 17 der Maschine entnommen werden können. Die Maschinensteuerung ist in einem Schaltschrank 18 angeordnet. Die Bedienung der Maschine erfolgt über ein Bedientableau 19. Oftmals ist zwischen dem Einlegebereich 6 und der Vakuum-/Siegelstation 10 ein weiterer Sicherheitsbereich 5 angeordnet, der einen Zugriff auf die sich in die Station 10 bewegenden Verpackungsunterschalen 7 verhindern soll.

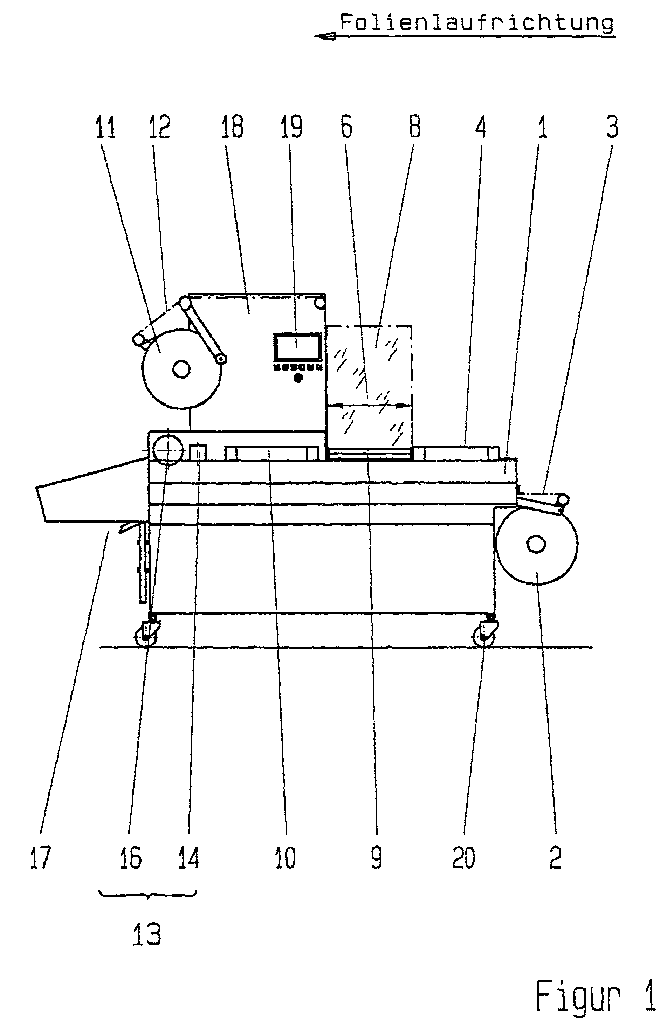

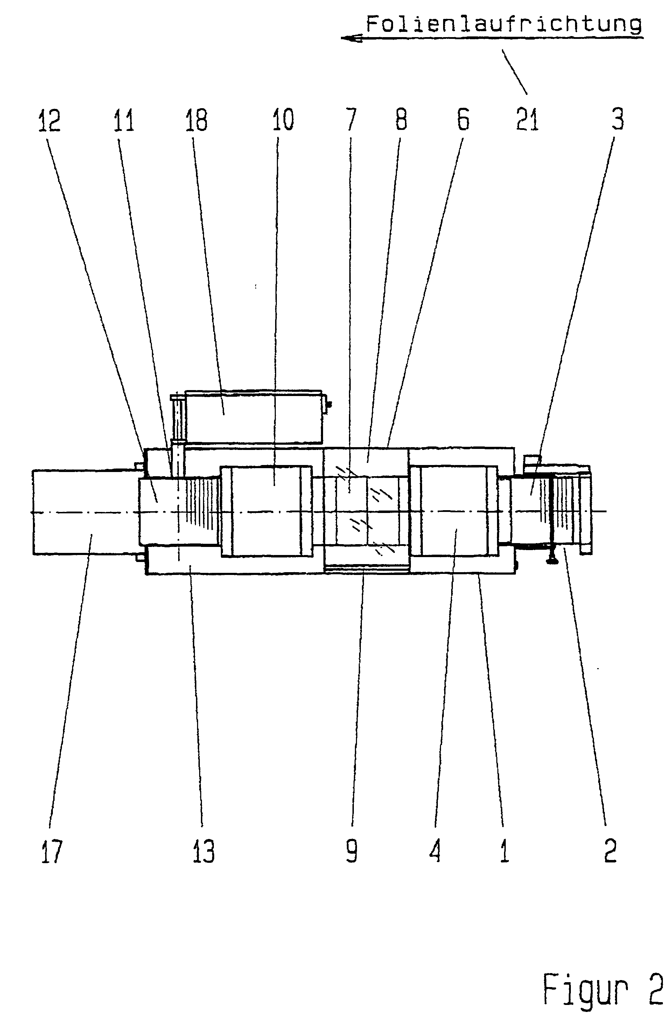

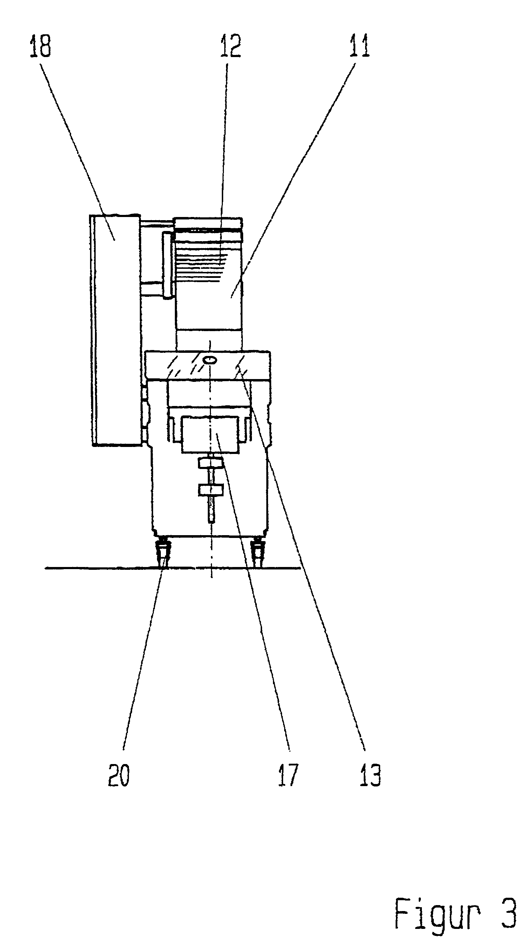

Die erfindungsgemäße Tiefziehverpackungsmaschine ist in den Figuren 1 bis 3 dargestellt.

Diese umfaßt nahezu die gleichen Baugruppen und Verarbeitungsstationen, wie es weiter oben im Zusammenhang mit den Figuren 4 und 5 beschrieben wurde. Gleiche Bauteile sind mit gleichen Bezugszeichen versehen.

Es ist jedoch nun erfindungsgemäß vorgesehen, nach der Formstation 4 einen Einlegebereich 6 anzuordnen, der durch eine Sicherheitsabdeckung 8 vollständig abgedeckt ist. Die Sicherheitsabdeckung 8 ist vorzugsweise als Klappdeckel ausgebildet, welcher z. B. aus durchsichtigem Kunststoff gefertigt ist, und einen Griffbügel 9 umfaßt, mittels welchem der Klappdeckel 8 auf- und zugeklappt werden kann, so daß bedarfsweise die Einlegestation 6 durch den Klappdeckel 8 abgedeckt werden kann, so daß ein Zugriff auf die Verpackungsunterschalen 7 verhindert wird. Zwischen den Vorschubtakten für die Verpackungsunterschalen 7 kann jedoch die Sicherheitsabdeckung 8 geöffnet werden, und die zu verpackenden Produkte in die Verpackungsunterschalen 7 eingelegt werden.

Wesentliches Merkmal der Erfindung ist demnach, daß der Einlegebereich 6 nun zusätzlich die Funktion der Sicherheitszonen 5 erfüllt, wie sie bei den Verpackungsmaschinen beim Stand der Technik vorgesehen waren.

Das Öffnen und Schließen der Sicherheitsabdeckung 8 kann sowohl manuell als auch maschinell erfolgen, wobei sich für den Antrieb elektromotorische oder pneumatische Einheiten eignen.

Stromabwärts der Einlegestation 6 folgt die Vakuum- und Siegelstation 10, wo die Verpackungen in beschriebener Weise vakuumiert und gesiegelt werden. Nach der Station 10 folgt die Schneidestation 13, die nun erfindungsgemäß über lediglich eine Querschneideeinrichtung 14 und eine Längsschneideeinrichtung 16 verfügt. Dadurch kann die Baulänge der Verpackungsmaschine zusätzlich verkürzt werden. Um jedoch die selbe Schneidleistung wie beim Einsatz von zwei Querschneideeinrichtungen zu erreichen, ist beim Vorschub ein Zwischentakt vorgesehen, in welchem eine zusätzliche Querschneidung erfolgt.

Im Gegensatz zum Stand der Technik ist die Folienrolle 11 für die Oberfolie 12 nicht an einem separatem Träger angeordnet, sondern direkt am Schaltschrank 18 befestigt. Hierdurch läßt zusätzlich Baulänge der Maschine einsparen.

Die gesamte Tiefziehverpackungsmaschine ist mit Transportrollen 20 ausgerüstet. welche ein leichtes Aufstellen der Maschine ermöglichen.

### Zeichnungslegende

- 1: Maschinenkörper
- 2: Folienrolle
- 3: Unterbahn
- 4: Formstation
- 5: Sicherheitsbereich
- 6: Einlegebereich
- 7: Verpackungsform
- 8: Sicherheitsabdeckung
- 9: Griffbügel
- 10: Vakuum-/Siegelstation
- 11: Folienrolle
- 12: Oberbahn
- 13: Schneidestation
- 14: Querschneideeinrichtung
- 15: Querschneideeinrichtung
- 16: Längsschneideeinrichtung
- 17: Auslaufbereich
- 18: Schaltschrank
- 19: Bedientableau
- 20: Transportrollen
- 21: Folienlaufrichtung

## Patentansprüche

1. Vakuum-Tiefziehverpackungsmaschine zum Verpacken von Produkten, mit einem Maschinenkörper, an welchem sequentiell hintereinander verschiedene Verarbeitungsstationen, nämlich eine Tiefzieh-Formstation (4), ein Einlegebereich (6), eine Vakuum- und Siegelstation (10) und eine Schneidestation (13) angeordnet sind, wobei das Verpackungsmaterial die Verarbeitungsstationen sequentiell durchläuft, wobei der Einlegebereich (6) zwischen Formstation (4) und Vakuum-/Siegelstation (10) vorgesehen und durch eine Sicherheitseinrichtung (8) vor Zugriff während eines Vorschubtaktes geschützt ist, wobei diese Sicherheitseinrichtung (8) den Bereich zwischen Formstation (4) und Vakuum/Siegelstation (10) vollständig abdeckt,
**dadurch gekennzeichnet,**
**daß** die Sicherheitseinrichtung aus einer entfernbaren oder beweglichen Schutzabdeckung (8) besteht.

2. Vakuum-Tiefziehverpackungsmaschine zum Verpacken von Produkten, mit einem Maschinenkörper an welchem sequentiell hintereinander verschiedene Verarbeitungsstationen, nämlich eine Tiefzieh-Formstation (4), ein Einlegebereich (6), eine Vakuum- und Siegelstation (10) und eine Schneidestation (13) angeordnet sind, wobei das Verpackungsmaterial die Verarbeitungsstationen sequentiell durchläuft,
**dadurch gekennzeichnet,**
**daß** die Formstation (4) gleichzeitig den Einlegebereich (6) für die Produkte bildet und durch eine Sicherheitseinrichtung (8) vor Zugriff während eines Vorschubtaktes geschützt ist, wobei die Formstation (4) durch die Sicherheitseinrichtung (8) vollständig abgedeckt ist, und wobei die Sicherheitseinrichtung aus einer entfernbaren oder beweglichen Schutzabdeckung (8) besteht.

3. Vakuum-Tiefziehverpackungsmaschine nach Anspruch 1 oder 2, **dadurch gekennzeichnet, daß** die Schutzabdeckung (8) als Klappdeckel ausgebildet ist.

4. Vakuum-Tiefziehverpackungsmaschine nach Anspruch 1 oder 2, **dadurch gekennzeichnet, daß** die Schutzabdeckung (8) als horizontal verschiebliche Abdeckung ausgebildet ist.

5. Vakuum-Tiefziehverpackungsmaschine nach einem der Ansprüche 1 bis 4, **dadurch gekennzeichnet, daß** die Schutzabdeckung (8) für eine manuelle Betätigung ausgebildet ist.

6. Vakuum-Tiefziehverpackungsmaschine nach einem der Ansprüche 1 bis 4, **dadurch gekennzeichnet, daß** die Schutzabdeckung (8) für eine maschinelle Betätigung ausgebildet ist.

7. Vakuum-Tiefziehverpackungsmaschine nach einem der Ansprüche 1 bis 5, **dadurch gekennzeichnet, daß** beim Produktvorschub ein Zwischentakt zur Querschneidung vorgesehen ist.

## Claims

1. Deep-drawing vacuum packaging machine for packaging of products, with a machine body on which various processing stations, i.e. a deep-drawing forming station (4), a feeding area (6), a vacuum and sealing station (10) and a cutting station (13) are sequentially arranged and at which the material to be packed passes sequentially through the processing stations and the feeding area (6) is provided between the forming station (4) and the vacuum/sealing station (10) and protected by means of a safety device (8) against access during the forward feed cycle, with the safety device (8) fully covering the area between forming station (4) and vacuum/sealing station (10),
**comprising**
that the safety device consists in a removable or mobile protective covering (8).

2. Deep-drawing vacuum packaging machine for packaging of products, with a machine body on which various processing stations, i.e. a deep-drawing forming station (4), a feeding area (6), a vacuum and sealing station (10) and a cutting station (13) are sequentially arranged and at which the material to be packed passes sequentially through the processing stations,
**comprising**
that the forming station (4) simultaneously forms the feeding area (6) for the products and is protected by means of a safety device (8) against access during the forward feed cycle, with the forming station (4) being fully covered by means of the safety device (8) and the safety device consisting in a removable or mobile protective covering (8).

3. Deep-drawing vacuum packaging machine acc. to claim 1 or 2, **comprising** that the protective covering (8) is formed by a hinged cap.

4. Deep-drawing vacuum packaging machine acc. to claim 1 or 2, **comprising** that the protective covering (8) is formed by a horizontally sliding covering.

5. Deep-drawing vacuum packaging machine acc. to one of the claims 1 to 4, **comprising** that the protective covering (8) is provided for manual actuation.

6. Deep-drawing vacuum packaging machine acc. to one of the claims 1 to 4, **comprising** that the protective covering (8) is provided for mechanical actuation.

7. Deep-drawing vacuum packaging machine acc. to one of the claims 1 to 5, **comprising** that at product forward feed an intermediate cycle is provided for cross cutting.

## Revendications

1. Machine emboutisseuse pour l'emballage sous vide pour l'emballage de produits, avec un corps de machine où différentes stations de traitement, i.e. une station d'emboutissage-formage (4), une zone de charge (6), une station à vide et de scellement (10) et une station de coupe (13) sont arrangées séquentiellement et où le matériel à emballer passe séquentiellement à travers les stations de traitement et où et la zone de charge (6) est disposée entre la station de formage (4) et la station à vide et de scellement (10) et protégée par un dispositif de sécurité (8) contre l'accès pendant le cycle d'avancement, et où ce dispositif de sécurité (8) couvre complètement la zone entre la station de formage (4) et la station à vide/de scellement (10),
**caractérisée par le fait**
**que** le dispositif de sécurité consiste en une chape de protection (8) démontable ou mobile.

2. Machine emboutisseuse pour l'emballage sous vide pour l'emballage de produits, avec un corps de machine où différentes stations de traitement, i.e. une station d'emboutissage-formage (4), une zone de charge (6), une station à vide et de scellement (10) et une station de coupe (13) sont arrangées séquentiellement et où le matériel à emballer passe séquentiellement à travers les stations de traitement,
**caractérisée par le fait**
**que** la station de formage (4) forme simultanément la zone de charge (6) pour les produits et qu'elle est protégée par un dispositif de sécurité (8) contre l'accès pendant un cycle d'avancement, et où la station de formage (4) est complètement couverte par le dispositif de sécurité (8) et où le dispositif de sécurité consiste en une chape de protection (8) démontable ou mobile.

3. Machine emboutisseuse d'emballage sous vide d'après la revendication 1 ou 2, **caractérisée par le fait que** la chape de protection (8) est formée par un couvercle rabattant.

4. Machine emboutisseuse d'emballage sous vide d'après la revendication 1 ou 2, **caractérisée par le fait que** la chape de protection (8) est formée par une chape déplaçable en sens horizontal.

5. Machine emboutisseuse d'emballage sous vide d'après une des revendications 1 à 4, **caractérisée par le fait que** la chape de protection (8) est prévue pour l'actuation manuelle.

6. Machine emboutisseuse d'emballage sous vide d'après une des revendications 1 à 4, **caractérisée par le fait que** la chape de protection (8) est prévue pour l'actuation mécanique.

7. Machine emboutisseuse d'emballage sous vide d'après une des revendications 1 à 5, **caractérisée par le fait qu'**un cycle intermédiaire est prévu pour la coupe transversale lors de l'avancement du produit .
